# EUROPEAN PATENT APPLICATION

(11) **EP 4 343 371 A2**
(43) Date of publication of application: **27.03.2024**
(21) Application number: 22863690.8
(22) Date of filing: 21.12.2022
(51) Int. Cl.: G01S 7/41, G01S 13/50

(54) **METHOD AND APPARATUS FOR DETERMINING NOISE FLOOR ESTIMATED VALUE, TARGET DETECTION METHOD AND APPARATUS, AND ELECTRONIC DEVICE**

(30) Priority: 18.02.2022 CN 202210153294; 22.02.2022 CN 202210162853
(71) Applicant: Calterah Semiconductor Technology (Shanghai) Co., Ltd, Shanghai 201210 (CN)
(72) Inventor: TANG, Ran, Shanghai 201210 (CN); LIU, Hongquan, Shanghai 201210 (CN)
(74) Representative: Arnold & Siedsma
(86) International application number: PCT/CN2022/140796
(87) International publication number: WO 2023/030556

(57) **Abstract**

Embodiments of the present disclosure provide a method and apparatus for determining a noise floor estimated value, a target detection method and apparatus, and an electronic device. The determining method comprises: obtaining a two-dimensional Fourier data plane corresponding to a linear frequency modulation continuous wave, wherein the two-dimensional Fourier data plane comprises a distance dimension and a Doppler dimension, and the distance dimension comprises a plurality of distances gates; and for each distance gate, determining a noise floor estimated value according to a plurality of two-dimensional Fourier transform energy data of the distance gate along the Doppler dimension. According to the technical solution provided by the embodiments of the present disclosure, the noise floor estimated value of each distance gate is determined, and the efficiency and accuracy of the determined noise floor estimated value are improved.

## Description

The present application claims priority of Chinese Patent Application No. 202210162853. X, filed to the CNIPA on February 22, 2022 and entitled "Method for determining noise floor level estimation value and Apparatus thereof, Electronic Device and Storage Medium", and priority of Chinese Patent Application No. 202210153294.6, filed to the CNIPA on February 18, 2022 and entitled "Method for determining noise floor level estimation value and Apparatus thereof, Electronic Device and Storage Medium", the contents of which should be regarded as being incorporated herein by reference.

### Technical Field

An embodiment of the disclosure relates to, but is not limited to, a technical field of frequency modulation continuous wave radar signals, in particular to a method for determining a noise floor level estimation value, a target detection method, apparatuses thereof, and an electronic device.

### Background

A frequency modulation continuous wave radar refers to a continuous wave radar whose transmit frequency is modulated by a specific signal, and has a rich technical experience, a low peak transmission power required, a simple modulation, a low cost, and a simple signal processing, so it is a commonly used radar system in an automobile radar. In a radar system, a transmitter continuously transmits multiple Linear Frequency Modulation Continuous Waves (LFMCW for short), and the receiver perform a down-conversion processing on the received LFMCW reflection signals to obtain baseband signals, and then a 2Dimension (2D) Fast Fourier Transform (FFT for short) is performed on the baseband signals. Herein, the first dimension is the FFT in each LFMCW pulse, that is, the range dimension FFT; and the second dimension is to take out the values at the same spectral line position within the FFT spectrum of all pulses and perform another FFT operation, that is, Doppler dimension FFT.

Generally, when a target is detected by 2D FFT plane, the Constant False Alarm Rate (CFAR for short) algorithm is usually used to detect the target, that is, a threshold value needs to be calculated. For each point to be detected in the 2D FFT plane, a rectangular region should be determined with coordinates of the point to be detected as the center, and the highest point, that is, a point with the largest energy value, in the rectangular region is removed, and an average energy value corresponding to the remaining points is calculated, and the average value is considered as the threshold value. After the threshold value is determined, coordinates of points to be detected whose power value is greater than the threshold value are determined as target positions.

However, in the above method the target position is only determined by the 2D FFT energy in the rectangular region. When there are too many targets in the rectangular region, the total energy value in the rectangular region will be higher, which may cause determined threshold value to be higher, that is, the noise floor level estimation value is higher; when there are too few targets or no target in the rectangular region, the total energy value in the rectangular region will be lower, which may cause determined threshold value to be lower, that is, the noise floor level estimation value is lower. In other words, the accuracy of the noise floor level estimation value determined by the above method is low.

### Summary

The following is a summary of the subject matter described in detail herein. This summary is not intended to limit the scope of protection of the claims.

Embodiments of the present disclosure provide a method for determining a noise floor level estimation value, a target detection method, apparatuses thereof, and an electronic device, which can determine the noise floor level estimation value of each range gate, and can effectively improve accuracy of the determined noise floor level estimation value.

In a first aspect, an embodiment of the present disclosure provides a method for determining a noise floor level estimation value, including: acquiring a two-dimensional Fourier data plane corresponding to a Linear Frequency Modulation Continuous Wave (LFMCW), wherein the two-dimensional Fourier data plane includes a range dimension and a Doppler dimension, and the range dimension includes multiple range gates; and for a range gate, determining a noise floor level estimation value according to multiple two-dimensional Fourier transform energy data of the range gate along the Doppler dimension.

Alternatively, the determining the noise floor level estimation value based on the multiple two-dimensional Fourier transform energy data of the range gate along the Doppler dimension includes: acquiring the multiple two-dimensional Fourier transform energy data of the range gate along the Doppler dimension from the two-dimensional Fourier data plane; and performing a statistic on the multiple two-dimensional Fourier transform energy data by using a histogram, and determining the noise floor level estimation value according to a statistical result of the histogram.

Alternatively, the determining the noise floor level estimation value according to the multiple two-dimensional Fourier transform energy data of the range gate along the Doppler dimension includes: dividing multiple preset intervals according to the data range corresponding to the multiple two-dimensional Fourier transform energy data, wherein the multiple preset intervals are arranged in an increasing or decreasing order according to a data range corresponding to each preset interval; dividing the multiple two-dimensional Fourier transform energy data into the multiple preset intervals to obtain a number of two-dimensional Fourier transform energy data in each preset interval; determining an interval in which a number of two-dimensional Fourier transform energy data is the largest or an interval in which a median of the multiple two-dimensional Fourier transform energy data is located, as a target preset interval; and determining a noise floor level estimation value in the target preset interval.

Alternatively, the multiple the preset intervals are non-uniformly distributed.

Alternatively, the determining the noise floor level estimation value in the target preset interval includes any one of the following: taking any two-dimensional Fourier transform energy data in the target preset interval as the noise floor level estimation value; taking an average value of all two-dimensional Fourier transform energy data in the target preset interval as the noise floor level estimation value; and taking a median of all two-dimensional Fourier transform energy data in the target preset interval as the noise floor level estimation value.

Alternatively, the method further includes: outputting noise floor level estimation values of all range gates in the two-dimensional Fourier data plane.

In a second aspect, an embodiment of the present disclosure provides a target detection method based on a noise floor level estimation value, including: acquiring a noise floor level estimation value of each range gate in a two-dimensional Fourier data plane corresponding to a Linear Frequency Modulation Continuous Wave (LFMCW); for a range gate, determining two-dimensional Fourier transform energy data larger than the noise floor level estimation value as two-dimensional Fourier transform energy data corresponding to a target; and determining a detection result of the target according to the two-dimensional Fourier transform energy data corresponding to the target.

Alternatively, the determining the detection result of the target according to the two-dimensional Fourier transform energy data corresponding to the target includes: determining a range gate corresponding to the two-dimensional Fourier transform energy data corresponding to the target as a range of the target, and determining a Doppler gate corresponding to the two-dimensional Fourier transform energy data corresponding to the target as a speed of the target.

Alternatively, the determining the two-dimensional Fourier transform energy data larger than the noise floor level estimation value as the two-dimensional Fourier transform energy data corresponding to the target includes: calculating a difference value between each two-dimensional Fourier transform energy data and the noise floor level estimation value; and determining two-dimensional Fourier transform energy data corresponding to a difference value larger than the preset threshold value as a two-dimensional Fourier transform energy data corresponding to the target.

Alternatively, the method further includes: outputting detection results of all targets in the two-dimensional Fourier data plane.

In a third aspect, an embodiment of the present disclosure provides an apparatus for determining a noise floor level estimation value, including an acquisition module and a processing module.

The acquisition module is configured to acquire a two-dimensional Fourier data plane corresponding to a Linear Frequency Modulation Continuous Wave (LFMCW), wherein the two-dimensional Fourier data plane includes a range dimension and a Doppler dimension, and the range dimension includes multiple range gates.

The processing module is configured to, for each range gate, determine a noise floor level estimation value according to multiple two-dimensional Fourier transform energy data of the range gate along the Doppler dimension.

Alternatively, the processing module is specially configured to acquire the multiple two-dimensional Fourier transform energy data of the range gate along the Doppler dimension from the two-dimensional Fourier data plane; and perform a statistic on the multiple two-dimensional Fourier transform energy data by using a histogram, and determine the noise floor level estimation value according to a statistical result of the histogram.

Alternatively, the processing module is specially configured to divide multiple preset intervals according to the data range corresponding to the multiple two-dimensional Fourier transform energy data, wherein the multiple preset intervals are arranged in an increasing or decreasing order according to a data range corresponding to each preset interval, divide the multiple two-dimensional Fourier transform energy data into the multiple preset intervals to obtain a number of two-dimensional Fourier transform energy data in each preset interval, determine an interval in which a number of two-dimensional Fourier transform energy data is the largest or an interval in which the median of the multiple two-dimensional Fourier transform energy data is located as a target preset interval, and determine the noise floor level estimation value in the target preset interval.

Alternatively, the apparatus further includes an outputting module, which is configured to output noise floor level estimation values of all range gates in the two-dimensional Fourier data plane.

In a fourth aspect, an embodiment of the present disclosure provides a target detection apparatus based on a noise floor level estimation value, including: a searching module and a determination module.

The searching module is configured to acquire a noise floor level estimation value of each range gate in a two-dimensional Fourier data plane corresponding to a LFMCW.

The determination module is configured to, for each range gate, determine two-dimensional Fourier transform energy data larger than the noise floor level estimation value as two-dimensional Fourier transform energy data corresponding to the target.

The determination module is configured to determine a detection result of the target according to the two-dimensional Fourier transform energy data corresponding to the target.

Alternatively, the determination module is specially configured to determine a range gate corresponding to the two-dimensional Fourier transform energy data corresponding to the target as a range of the target, and determine a Doppler gate corresponding to the two-dimensional Fourier transform energy data corresponding to the target as a speed of the target.

Alternatively, the determination module is specially configured to calculate a difference value between each two-dimensional Fourier transform energy data and the noise floor level estimation value, and determine two-dimensional Fourier transform energy data corresponding to a difference value larger than the preset threshold value as a two-dimensional Fourier transform energy data corresponding to the target.

Alternatively, the apparatus further includes an outputting module, which is configured to output detection results of all targets in the two-dimensional Fourier data plane.

In a fifth aspect, an embodiment of the present disclosure also provides an electronic device including a processor and a memory communicatively connected to the processor.

The memory stores computer-executable instructions; and the processor executes computer-executable instructions stored in the memory to implement the method in any of the possible implementations of the first aspect and the second aspect described above.

In a sixth aspect, an embodiment of the present disclosure also provides a computer-readable storage medium having computer-executable instructions stored thereon, when the computer-executable instructions are executed by a processor, the method in any of the possible implementations of the first aspect and the second aspect described above is implemented.

In a seventh aspect, an embodiment of the present disclosure also provides a computer program product including a computer program, when the computer program is executed by a processor, the method in any of the possible implementations of the first aspect and the second aspect described above is implemented.

It may be seen that the embodiments of the present disclosure provide a method for determining a noise floor level estimation value, a target detection method, apparatuses thereof, and an electronic device. According to the embodiments of the present disclosure, a two-dimensional Fourier data plane corresponding to a LFMCW is acquired, wherein the two-dimensional Fourier data plane includes a range dimension and a Doppler dimension, and the range dimension includes multiple range gates; and for each range gate, the noise floor level estimation value is determined according to multiple two-dimensional Fourier transform energy data of the range gate along the Doppler dimension. Since the noise floor level estimation values along each range gate are the same, the technical solutions provided by the embodiments of the present disclosure avoid processing each coordinate point by determining the noise floor level estimation value of each range gate, which effectively reduces the calculation amount and improves the accuracy of the determined noise floor level estimation value.

After the drawings and detailed description are read and understood, other aspects may be understood.

### Brief Description of Drawings

FIG. 1 is a schematic diagram of an application scenario of a method for determining a noise floor level estimation value provided by an embodiment of the present disclosure.
FIG. 2 is a schematic flowchart of a method for determining a noise floor level estimation value provided by an embodiment of the present disclosure.
FIG. 3 is a schematic flowchart of a target detection method based on a noise floor level estimation value provided by an embodiment of the present disclosure.
FIG. 4 is a schematic flowchart of obtaining a two-dimensional Fourier data plane provided by an embodiment of the present disclosure.
FIG. 5 is a schematic diagram of a range dimension and a Doppler dimension provided by an embodiment of the present disclosure.
FIG. 6 is a schematic diagram of a two-dimensional Fourier data plane provided by an embodiment of the present disclosure.
FIG. 7 is a histogram corresponding to power of a range gate with an index value of 56 provided by an embodiment of the present disclosure.
FIG. 8 is a broken line schematic diagram of a noise floor level estimation value provided by an embodiment of the present disclosure.
FIG. 9 is another broken line schematic diagram of a noise floor level estimation value provided by an embodiment of the present disclosure.
FIG. 10 is a schematic diagram of a structure of an apparatus for determining a noise floor level estimation value provided by an embodiment of the present disclosure.
FIG. 11 is a schematic diagram of a structure of a target detection apparatusbased on a noise floor level estimation value provided by an embodiment of the present disclosure.
FIG. 12 is a schematic diagram of a structure of an electronic device provided by an embodiment of the present disclosure.

Clear embodiments of the present disclosure have been shown by the above drawings and will be described in more detail below. These drawings and descriptions are not intended to limit the scope of the idea of the present disclosure in any way, but to illustrate the concept of the present disclosure for those skilled in the art by reference to specific embodiments.

### Detailed Description

Exemplary embodiments will be described in detail herein, and examples thereof are shown in the drawings. When following description involves the drawings, unless otherwise indicated, a same number in different drawings indicates a same or similar element. The embodiments described in following exemplary embodiments do not represent all embodiments according to the present disclosure. Instead, they are merely examples of an apparatus and method according to some aspects of the present disclosure as detailed in the appended claims.

In embodiments of the present disclosure, "at least one" refers to one or more, and "a plurality of' refers to two or more. "And/Or", describing the association relationship of associated objects, indicates that there may be three relationships, for example, A and/or B, may represents that there are three cases: A alone, A and B simultaneously, and B alone, where A and B may be singular or plural. In the literal description of embodiments of the present disclosure, the character "/" generally represents an "or" relationship between the preceding and following associated objects.

The technical solutions provided by embodiments of the present disclosure may be applied to a scene of LFMCW processing. A frequency modulation continuous wave radar, as a millimeter wave radar commonly used in automobiles, has advantages of a high frequency, a strong diffraction capability, a wide coverage and a stable measurement capability.

At present, when a frequency modulation continuous wave radar is used for target detection, a Fast Fourier Transform (FFT) is usually performed on the linear frequency modulation continuous wave (LFMCW) received by the receiver to obtain a two-dimensional Fourier data plane, and a CFAR algorithm is used to detect a target of the two-dimensional Fourier data plane. For any point to be detected in the 2D FFT plane, a rectangular region is determined with coordinates of the point to be detected as the center, and a point with the largest energy value in the rectangular region is removed, and an average value of the energy values corresponding to the remaining points is calculated, which is taken as a threshold value. If a power value corresponding to the point to be detected is greater than the threshold value, the coordinates of the point to be detected are determined as a target position. By repeatedly performing the above approach, all target positions in the 2D FFT plane may be determined by translating the rectangular region, thereby all targets are detected.

However, there are multiple points to be detected in the 2D FFT plane, and a rectangular region needs to be determined for each point, which makes the workload of target detection heavy. Since the energy value corresponding to the position of the target is high, and the number of targets contained in the rectangular region is different, when there are too many targets contained in the rectangular region, it is possible that the determined threshold value is higher, and a problem of missed detections may occur due to the higher threshold value, that is, the higher noise floor level estimation value; and when there are too few targets or no targets in the rectangular region, it is possible that the determined threshold value is lower, a problem of false alarm may occur due to the lower threshold value, that is, the lower noise floor level estimation value. Therefore, the accuracy of the noise floor level estimation value determined by the noise floor level estimation approach currently used is low, and the accuracy of target detection is reduced.

In order to solve the problem that the determined noise floor level estimation value is lower due to the higher or lower threshold value determined, an overall noise energy estimation may be performed on the two-dimensional Fourier transform data corresponding to the LFMCW to determine a noise floor level estimation value, and when the two-dimensional Fourier transform energy data is larger than the noise floor level estimation value, it may be considered that the energy at this location is caused by a target reflection instead of noise. In addition, the inventor has found by research that in the two-dimensional Fourier data plane, for the same range gate, the noise floor level estimation value along the Doppler dimension is constant. Therefore, for any range gate, the noise floor level estimation of the range gate may be performed according to the energy data based on the range gate along the Doppler dimension. For example, a noise floor level estimation value of a range gate is determined based on a plurality or all of the two-dimensional Fourier transform energy data, that is, the same range gate uses the same noise floor level estimation value for the target detection. Since there are fewer targets along the Doppler dimension in one range gate, the influence of the target on the noise floor level estimation value can be avoided, thereby effectively improving an accuracy of the noise floor level estimation value determined for each range gate. Meanwhile, different range gates may use different noise floor level estimation values for target detection, so that the noise floor level estimation value of each range gate is closer to its own actual noise floor level to further improve the accuracy of overall target detection.

In addition, when a noise floor level estimation is performed for each target range gate respectively, the noise floor level estimation may be performed according to respective corresponding energy data based on part energy data (the noise floor level estimation of the embodiment of the present disclosure may be performed after the energy data corresponding to each selected range gate is preprocessed, for example, removing the partial energy maximum value and/or the minimum value, or based on a manner of such as presetting threshold values) or all energy data, in accordance with a manner of such as an average value, a median value, etc., or meanwhile, after section division of energy data, the noise floor level estimation of each selected range gate may be acquired by means of such as histogram, logarithm, etc.

In an embodiment of the present disclosure, for the acquired 2DFFT data, the above noise floor level estimation may be respectively performed for some or all range gates according to actual requirements, so that the noise floor level estimation values of the required range gates are closer to their respective actual noise floor level values. A method for the noise floor level estimation of an embodiment of the present disclosure for all the range gates is described in detail below.

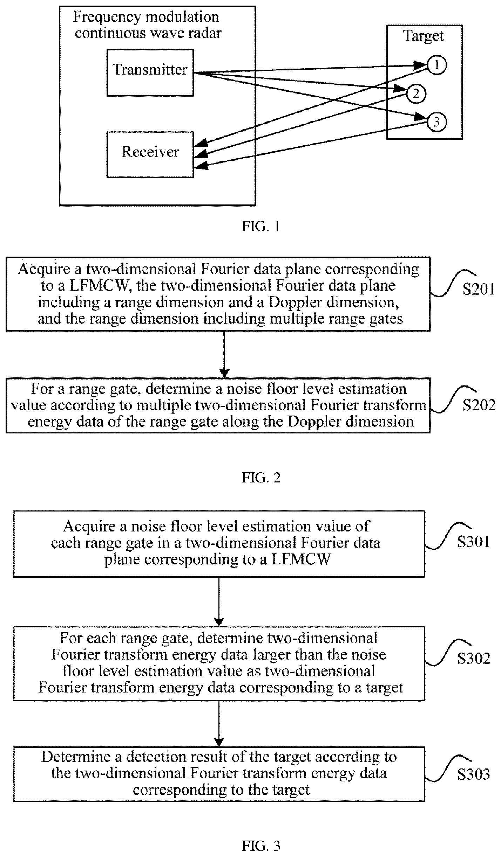

FIG. 1 is a schematic diagram of an application scenario of a method for determining a noise floor level estimation value provided by an embodiment of the present disclosure. According to FIG. 1, the noise floor level estimation value may be applied to a scenario in which target detection is performed by a LFMCW. A transmitter in a frequency modulation continuous wave radar transmits the LFMCWs to target positions and receives echo signal (i.e. reflected LFMCWs) by a receiver, wherein the echo signals includes LFMCWs reflected by the LFMCWs that were transmitted, from target 1, target 2 and target 3, and embodiments of the present disclosure only represent the echo signals reflected from the target 1, the target 2 and the target 3. It may be understood that the echo signals received by the receiver may also include noise signals (not shown in FIG. 1). A two-dimensional Fourier data plane is obtained by performing a two-dimensional Fourier transform on the received LFMCW. A noise floor level estimation value of each range gate along Doppler dimension in the two-dimensional Fourier data plane is determined by performing the noise floor level estimation on the received two-dimensional Fourier data plane, and the target(s) existing in each range gate is determined, then all targets are determined.

A technical solution provided by the embodiment of the present disclosure may avoid an influence of the target on the noise floor level estimation value and improve the accuracy of the determined noise floor level estimation value by determining a noise floor level estimation value of each range gate. Therefore, when the noise floor level estimation value of each range gate determined by the embodiment of the present disclosure is used for target detection, the accuracy of target detection can be effectively improved.

A method for determining a noise floor level estimation value provided by the present disclosure will be described below in detail by several embodiments. It may be understood that the following embodiments may be combined with one another, and those identical or similar concepts or processes may not be repeated in some embodiments.

FIG. 2 is a schematic flowchart of a method for determining a noise floor level estimation value provided by an embodiment of the present disclosure. The method of determining the noise floor level estimation value may be performed by software and/or a hardware apparatus, for example, the hardware apparatus may be an apparatus for determining the noise floor level estimation value, which may be a terminal or a processing chip in the terminal (such as a millimeter wave radar chip, etc.). Exemplarily, as shown in FIG. 2, the method for determining the noise floor level estimation value may include the following acts.

In S201, a two-dimensional Fourier data plane corresponding to a LFMCW is acquired, wherein the two-dimensional Fourier data plane includes a range dimension and a Doppler dimension, and the range dimension includes multiple range gates.

Exemplarily, the two-dimensional Fourier data plane corresponding to the LFMCW is acquired by performing a two-dimensional Fourier transform on the LFMCW. The two-dimensional Fourier data plane includes a range dimension and a Doppler dimension which are perpendicular to each other, the range dimension includes multiple range gates and the Doppler dimension includes multiple Doppler gates. In addition, the two-dimensional Fourier data plane also includes two-dimensional Fourier transform energy data (for example, power corresponding to coordinate points) corresponding to coordinate point positions formed by range dimensions and Doppler dimensions. The embodiments of the present disclosure are not limited thereto.

In S202, for a range gate, a noise floor level estimation value is determined according to multiple two-dimensional Fourier transform energy data of the range gate along the Doppler dimension.

In some exemplary embodiments, when the noise floor level estimation value is determined according to the multiple two-dimensional Fourier transform energy data of the range gate along the Doppler dimension, the multiple two-dimensional Fourier transform energy data of the range gate along the Doppler dimension may be acquired from the two-dimensional Fourier data plane; and a statistic is performed on the multiple two-dimensional Fourier transform energy data by using a histogram, and the noise floor level estimation value is determined according to a statistical result of the histogram.

In an embodiment of the present disclosure, "performing a statistic on the multiple two-dimensional Fourier transform energy data by using a histogram" means dividing a numerical range of the multiple two-dimensional Fourier transform energy data into multiple intervals, and performing a statistic on the number of two-dimensional Fourier transform energy data in each interval. In the embodiment of this application, in order to facilitate description, it is described in the form of table statistics, while in practical application, the statistic is achieved based on a data statistical processing technology related to "histogram statistics".

Exemplarily, multiple two-dimensional Fourier transform energy data of a range gate along the Doppler dimension is acquired from the two-dimensional Fourier data plane, that is, multiple coordinate points of the range gate along the Doppler dimension are acquired, and two-dimensional Fourier transform energy data corresponding to each coordinate point is acquired.

In the embodiment of the present disclosure, the statistic is performed on the multiple two-dimensional Fourier transform energy data by using the histogram, so that the noise floor level estimation value can be determined fast according to a statistical result of the histogram, which can avoid a problem of missed detections caused by too many targets in the rectangular region or false alarms caused by too few targets in the rectangular region, and improve the accuracy of target detection effectively.

Exemplarily, when the statistic is performed on the multiple two-dimensional Fourier transform energy data by using the histogram and the noise floor level estimation value is determined according to the statistical result of the histogram, multiple preset intervals may be divided according to the data range corresponding to the multiple two-dimensional Fourier transform energy data, wherein the multiple preset intervals are arranged in an increasing or decreasing order according to the data range corresponding to each preset interval. The multiple two-dimensional Fourier transform energy data are divided into the multiple preset intervals to obtain the number of two-dimensional Fourier transform energy data in each preset interval; and an interval in which the number of two-dimensional Fourier transform energy data is the largest, or an interval in which the median of multiple two-dimensional Fourier transform energy data is located, is determined as a target preset interval. A noise floor level estimation value is determined in the target preset interval.

Exemplarily, the preset intervals may be uniformly distributed or non-uniformly distributed, and the value ranges of the preset intervals may be preset, or determined according to the range of the multiple acquired two-dimensional Fourier transform energy data, and the preset intervals are not limited by embodiments of the present disclosure.

For example, assumed that the multiple two-dimensional Fourier transform energy data range is between 0 and 100, five preset intervals uniformly distributed may be set, i.e., the ranges of the five preset intervals are set to be between 0 and 20, between 20 and 40, between 40 and 60, between 60 and 80, and between 80 and 100, respectively; or five preset intervals non-uniformly distributed are set, for example, the ranges of the five preset intervals are set to be between 0 and 25, between 25 and 40, between 40 and 68, between 68 and 85, and between 85 and 100, respectively; or a nonlinear mapping may be performed on the multiple two-dimensional Fourier transform energy data, for example, a logarithm operation of a base of 10 is performed, then the number of preset intervals and the ranges of the preset intervals are set according to the nonlinearly mapped data. Embodiments of the present disclosure only describe the setting approach of the preset intervals as an example, which does not mean that the embodiments of the present disclosure are limited thereto.

Exemplarily, when the noise floor level estimation value is determined in the target preset interval, any one of two-dimensional Fourier transform energy data in the target preset interval may be taken as the noise floor level estimation value, or an average value of all two-dimensional Fourier transform energy data in the target preset interval may be taken as the noise floor level estimation value, or the noise floor level estimation value may be determined by other ways, which is not limited by the embodiments of the present disclosure.

Exemplarily, assumed that the number of two-dimensional Fourier transform energy data obtained is 50, which are distributed in the preset intervals between 0 to 20, between 20 to 40, between 40 to 60, between 60 to 80 and between 80 to 100, the numbers in the preset intervals are 10, 20, 5, 5, and 10, respectively. A median of the two-dimensional Fourier transform energy data, i.e., the 25th Fourier transform energy data arranged from small to large among all the two-dimensional Fourier transform energy data, is located in the second interval, that is, the interval between 20 and 40. Herein, the size of the median may be set to other values according to needs, and the median is smaller than the total number of two-dimensional Fourier transform energy samples.

In another possible implementation, after the multiple two-dimensional Fourier transform energy data of the range gate along the Doppler dimension are acquired, the multiple two-dimensional Fourier transform energy data may be divided into multiple preset intervals to obtain the number of two-dimensional Fourier transform energy data in each preset interval; and a histogram or a broke line graph is plotted according to the preset intervals and the number of two-dimensional Fourier transform energy data in each preset interval. The two-dimensional Fourier transform energy data with the highest occurrence frequency, or a median of the multiple two-dimensional Fourier transform energy data, is determined based on the histogram or the broke line graph plotted, and the two-dimensional Fourier transform energy data with the highest occurrence frequency, or the median of the multiple two-dimensional Fourier transform energy data is determined as a noise floor level estimation value.

It may be understood that by plotting a histograms or a broken line graph, it is convenient to determine the two-dimensional Fourier transform energy data with the highest occurrence frequency. Exemplarily, abscissas of the histogram or the broke line graph may be two-dimensional Fourier transform energy data, and a vertical coordinate may be the number of two-dimensional Fourier transform energy data in each preset interval. Embodiments of the present disclosure are only illustrated by taking the above the histogram and line graph as examples, which does not mean the embodiments of the present disclosure are limited thereto.

It may be understood that after the histogram or the broke line graph is plotted, the two-dimensional Fourier transform energy with the highest occurrence frequency may be directly determined according to the histogram or the broke line graph, and the two-dimensional Fourier transform energy corresponding to the median may be determined by analyzing the histogram or the broke line graph.

In the embodiment of the present disclosure, by dividing the multiple two-dimensional Fourier transform energy, the two-dimensional Fourier transform energy with the highest occurrence frequency or the two-dimensional Fourier transform energy corresponding to the median can be quickly determined, so that the efficiency of determining the noise floor level estimation value is higher.

It may be seen that in the method for determining the noise floor level estimation value provided by the embodiment of the present disclosure, a two-dimensional Fourier data plane corresponding to a LFMCW is acquired, wherein the two-dimensional Fourier data plane includes a range dimension and a Doppler dimension, and the range dimension includes multiple range gates; and for each range gate, the noise floor level estimation value is determined according to multiple two-dimensional Fourier transform energy data of the range gate along the Doppler dimension. The technical solution provided by the embodiment of the disclosure avoids processing each coordinate point by determining the noise floor level estimation value of each range gate, thus effectively reduces the calculation amount, and can avoid the influence of the target on the noise floor level estimation value, thereby effectively improving the accuracy of the determined noise floor level estimation value.

In another embodiment of the present disclosure, noise floor level estimation values for all range gates in the two-dimensional Fourier data plane may also be output after the noise floor level estimation value for each range gate is obtained.

For example, when the noise floor level estimation values are output, the corresponding data may be directly outputted, or may be outputted in the form of a table, for example an excel table, a histogram or the like, which is not limited by the embodiments of the present disclosure.

In the embodiment of the present disclosure, the noise floor level estimation values are outputted, so that the user may know the noise floor level estimation values in time and perform further analysis and processing according to the noise floor level estimation values.

After the noise floor level estimation value of each range gate is determined in the above embodiment, the target detection may be performed by the determined noise floor level estimation values. FIG. 3 is a schematic flowchart of a target detection method based on a noise floor level estimation value provided by an embodiment of the present disclosure. The target detection method based on the noise floor level estimation value may be performed by software and/or a hardware apparatus, for example, the hardware apparatus may be a target detection apparatus based on noise floor level estimation value, which may be a terminal or a processing chip in the terminal. Exemplarily, as shown in FIG. 3, the target detection method based on noise floor level estimation value may include the following acts.

In S301, a noise floor level estimation value of each range gate in a two-dimensional Fourier data plane corresponding to a LFMCW is acquired.

Exemplarily, when the noise floor level estimation value of each range gate is acquired, the noise floor level estimation value determined in the above embodiment may be directly acquired, and the two-dimensional Fourier transform energy data with the highest occurrence frequency or corresponding the median may be determined as the noise floor level estimation value by searching the histogram or the broke line graph plotted in the above embodiment, or the noise floor level estimation value may be determined by adopting the approach of dividing the intervals described in the above embodiments. The embodiments of the present disclosure do not make any limitation on the method for determining the noise floor level estimation value in each range gate.

In S302, for each range gate, two-dimensional Fourier transform energy data larger than the noise floor level estimation value is determined as two-dimensional Fourier transform energy data corresponding to a target.

Exemplarily, when the two-dimensional Fourier transform energy data larger than the noise floor level estimation value is determined as the two-dimensional Fourier transform energy data corresponding to the target, a difference value between each two-dimensional Fourier transform energy data and the noise floor level estimation value may be calculated; two-dimensional Fourier transform energy data corresponding to a difference value greater than a preset threshold value is determined as the two-dimensional Fourier transform energy data corresponding to the target. Embodiments of the present disclosure do not made limitations on the preset threshold value.

It may be understood that when the two-dimensional Fourier transform energy data corresponding to the target is determined, a sum of the preset threshold value and the noise floor level estimation value may be calculated first, and the two-dimensional Fourier transform energy data larger than the sum may be determined as a two-dimensional Fourier transform energy data corresponding to the target.

In the embodiment of the present disclosure, the two-dimensional Fourier transform energy data of which the difference value from the noise floor level estimation value is greater than the preset threshold value is determined as the two-dimensional Fourier transform energy data corresponding to the target, which can avoid a problem of false alarms, thus further improving the accuracy of the target detection.

In S303, a detection result of the target is determined according to the two-dimensional Fourier transform energy data corresponding to the target.

Exemplarily, when the detection result of the target is determined according to the two-dimensional Fourier transform energy data corresponding to the target, a range gate corresponding to the two-dimensional Fourier transform energy data corresponding to the target may be determined as a range of the target, and a Doppler gate corresponding to the two-dimensional Fourier transform energy data corresponding to the target may be determined as a speed of the target.

Since the coordinate values of the range dimension and Doppler dimension obtained by the two-dimensional Fourier transform correspond to a range and a speed of the target respectively, the range gate and Doppler gate corresponding to the two-dimensional Fourier transform energy data corresponding to the target may be determined as the range and speed of the target, respectively.

Exemplarily, coordinates corresponding to the two-dimensional Fourier transform energy data corresponding to the target may also be determined as the position of the target.

In the embodiment of the present disclosure, due to the accuracy of the determined noise floor level estimation value, the range and speed of the target can be accurately determined through the range gate and the Doppler gate, thereby ensuring a full coverage of the target detection.

It may be seen that according to the target detection method based on the noise floor level estimation value provided by an embodiment of the present disclosure, a noise floor level estimation value of each range gate in two-dimensional Fourier data plane corresponding to a LFMCW is acquired; for each range gate, two-dimensional Fourier transform energy data larger than the noise floor level estimation value is determined as a two-dimensional Fourier transform energy data corresponding to a target; and according to the two-dimensional Fourier transform energy data corresponding to the target, a detection result of the target is determined. According to the technical solution provided by the embodiment of the disclosure, the target detection is performed according to the acquired noise floor level estimation value of each range gate, and since the accuracy of the noise floor level estimation value of each range gate is high, the problem of false alarms or missed detections can be avoided, thereby improving the accuracy of the target detection.

Exemplarily, in an embodiment of the present disclosure, after the detection result of the target is obtained, detection results of all the targets in the two-dimensional Fourier data plane may also be output.

Exemplarily, when the detection results of the targets are outputted, the corresponding data may be directly outputted, or may be outputted in the form of a table such as an excel table or other ways, which is not limited by the embodiments of the present disclosure.

In the embodiment of the present disclosure, the detection results of the targets are outputted, so that the user may know the detection results of the targets in time.

In the above embodiment, by performing operations such as histogram statistics on 2D FFT energy along respective Doppler dimensions for any selected range gate, an interval of an energy with the highest occurrence frequency or an interval where the median of the energy values is located may be used as the noise floor level estimation of the range gate, so as to avoid an influence of local factors in the 2D FFT plane, and further make the obtained noise floor level estimation value more objective and accurate.

In addition, in the existing CFAR approach, different regions (regions are not limited by each range gate) are divided, and a noise floor level estimation for each region is performed, which causes the estimation value to be easily affected by the number of targets and the total energy in the region; and however, compared with the existing CFAR approach, the present disclosure adopts the noise floor level estimation solution, in which the noise floor level estimation on each range gate of the 2D FFT plane (i.e., the two-dimensional Fourier data plane) base on energy only needs to be performed once, the noise floor level estimation solution of the present disclosure can effectively reduce the calculation amount, so that the speed of the target detection is faster and more efficient, and the obtained noise floor level estimation value is more objective and accurate. Meanwhile, the noise floor level estimation is performed by dividing regions such as using a histogram, which makes the presentation of noise floor level data more intuitive and the operation more efficient.

In another alternative embodiment, for an FMCW target sensor (such as a millimeter wave radar), a superposition operation may be performed on a part of (multiple) or all of the receiving channels to obtain a 2DFFT plane, and then the noise floor level estimation method described in various embodiments of the present disclosure may be performed based on the obtained 2DFFT plane to further improve the efficiency of noise floor level estimation.

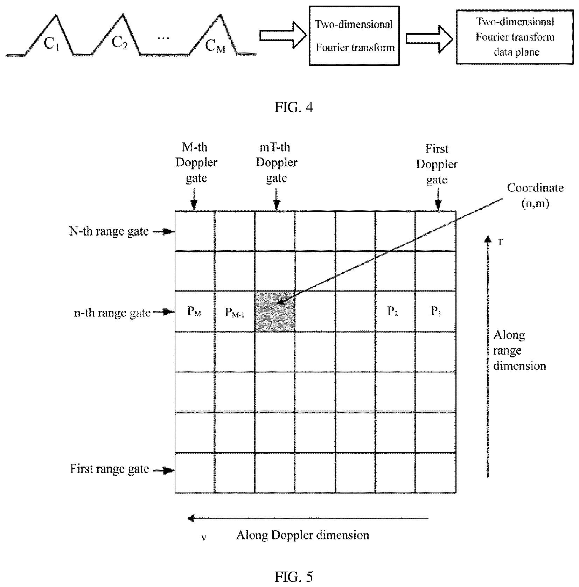

In order to facilitate understanding of the method for determining the noise floor level estimation value provided by the embodiments of the present disclosure, the technical solution provided by the embodiments of the present disclosure will be described in detail below. FIG. 4 is a schematic flowchart of obtaining a two-dimensional Fourier data plane provided by an embodiment of the present disclosure.

As shown in FIG. 4, assumed that a transmitter of an FMCW radar transmits M LFMCWs, i.e., LFMCW waveform pulses, after the receiver receives echo signals of M LFMCW waveform pulses, i.e., C1, C2, ..., CM, each pulse may be sampled to obtain multiple sampling points. Exemplarily, each pulse may be sampled at equal intervals to obtain N sampling points. A two-dimensional Fourier data plane is obtained by performing a two-dimensional Fourier transform on N sampling points corresponding to each pulse.

Exemplarily, when the two-dimensional Fourier transform is performed, an N-point range dimension Fourier transform FFT may be performed for N sampling points corresponding to each pulse, to obtain M groups of N-point range dimension FFT data. Further, from the M groups of N-point range dimension FFT data, M data with the same index value are taken out for performing a M-point Doppler dimension FFT, to obtain N groups of M point Doppler dimension FFT data, that is, the final 2D FFT energy data, wherein the index value ranges from 1 to N.

Exemplarily, the range dimension and Doppler dimension in the two-dimensional Fourier data plane corresponding to the above echo signals may refer to those shown in FIG. 5, which is a schematic diagram of a range dimension and a Doppler dimension provided by an embodiment of the present disclosure. As shown in FIG. 5, there are M Doppler gates and N range gates in the two-dimensional Fourier data plane corresponding to the above echo signals.

Alternatively, when a noise floor level estimation value corresponding to the n-th range gate is determined, M 2D FFT energy data P1, P2, ..., P_{M-1}, P_{M} of the n-th range gate along the Doppler dimension are acquired. The acquired M 2D FFT energy data are outputted by a histogram.

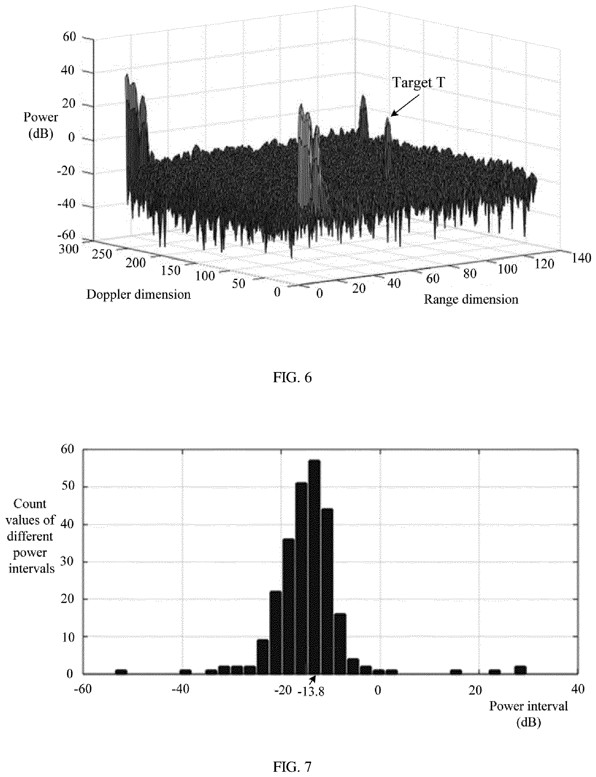

Exemplarily, assumed that the two-dimensional Fourier data plane is shown in FIG. 6, which is a schematic diagram of a two-dimensional Fourier data plane provided by an embodiment of the present disclosure. As shown in FIG. 6, the two-dimensional Fourier data plane is formed by a range dimension, a Doppler dimension and a dimension corresponding to power. Herein, the number of points of the range dimension FFT is 256, and the part in which the index values of the range gates are from -127 to 0 is symmetrically distributed with the part in which the index values of the range gates are from 0 to 127. An embodiment of the present disclosure only represents the part in which the index values of the range gates are from 0 to 127, and the number of points of the Doppler dimension FFT is 256. It may be understood that the power is the two-dimensional Fourier transform energy data.

Taking the marked point T to be detected in FIG. 6 as an example, the index value of the range gate corresponding to the point T to be detected is 56, the power values corresponding to the coordinate points of the range gate are acquired, and multiple power values are divided into intervals to form a histogram. Exemplarily, it may refer to FIG. 7, which is a histogram corresponding to powers of a range gate with an index value of 56 provided by an embodiment of the present disclosure. As can be seen from FIG. 7, the two-dimensional Fourier transform energy data of the range gate with an index value of 56, that is, the power values, are divided into 32 intervals, which are non-uniformly distributed. For setting of the histogram intervals, it may refer to the description of setting the preset intervals in the above embodiments, which will not be repeated in the embodiment of the present disclosure here. As can be seen from FIG. 7, the energy value in the interval of which the occurrence frequencies are highest in the multiple power values of the range gate is about -13. 8 dB, and the energy value in the interval, where the median of the multiple power values is located, is also about-13. 8 dB, so the noise floor level estimation value of the range gate may be -13. 8 dB.

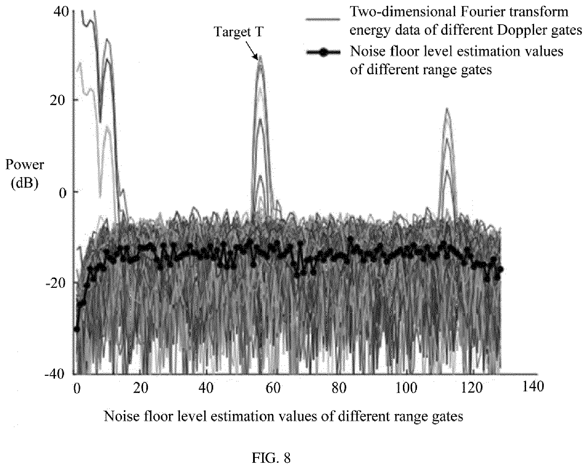

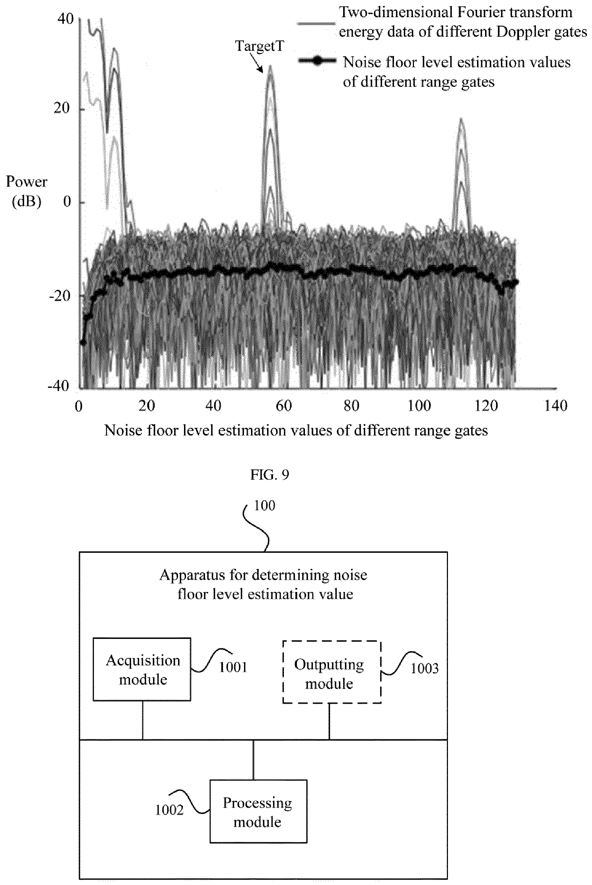

According to the above, the noise floor level estimation value of the range gate may be determined by a frequency or a median. Exemplarily, FIG. 8 is a broken line schematic diagram of a noise floor level estimation value provided by an embodiment of the present disclosure. As shown in FIG. 8, a power value with the highest occurrence frequency is determined as the noise floor level estimation value, and the determined noise floor level estimation value may refer to that shown in FIG. 8. FIG. 9 is another broken line schematic diagram of a noise floor level estimation value provided by an embodiment of the present disclosure. As shown in FIG. 9, the power value corresponding to the median is determined as the noise floor level estimation value, and the determined noise floor level estimation value may refer to that shown in FIG. 9. In FIG. 8 and FIG. 9, the two-dimensional Fourier transform energy data shown in FIG. 6 are represented by multiple lines, that is, multiple data represent two-dimensional Fourier transform energy data of different Doppler gates; and the broken lines marked with circles are the noise floor level estimation values of different range gates. According to FIG. 8 and FIG. 9, the noise floor level estimation value determined by the median is more stable.

To sum up, the technical solution provided by the embodiment of the present disclosure performs statistics on each range gate along the Doppler dimension on the two-dimensional Fourier data plane to determine the noise floor level estimation value of each range gate. Compared with a traditional solution, the technical solution of the present disclosure can reduce the calculation amount greatly, and thus can effectively improve the efficiency and accuracy of the determined noise floor level estimation value.

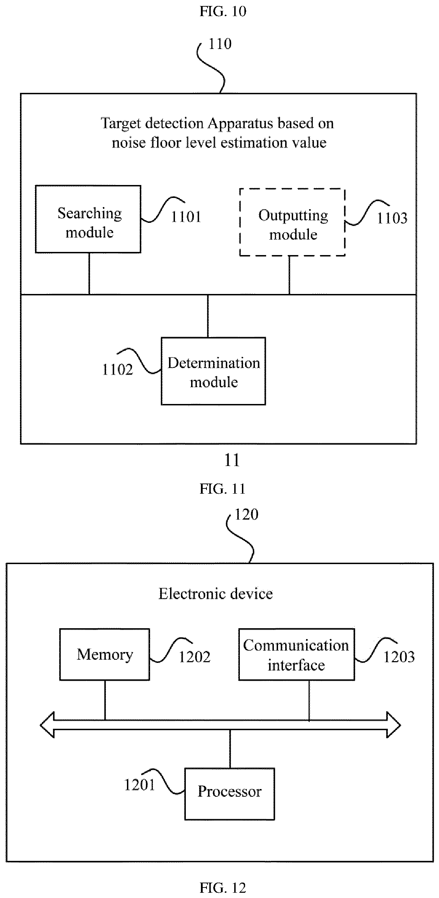

FIG. 10 is a schematic diagram of a structure of an apparatus 100 for determining a noise floor level estimation value provided by an embodiment of the present disclosure. Exemplarily, as shown in FIG. 10, the apparatus 100 for determining the noise floor level estimation value may include: an acquisition module 1001 and a processing module 1002.

The acquisition module 1001 is configured to acquire a two-dimensional Fourier data plane corresponding to a LFMCW, wherein the two-dimensional Fourier data plane includes a range dimension and a Doppler dimension, and the range dimension includes multiple range gates.

The processing module 1002 is configured to, for a range gate, determine a noise floor level estimate value according to multiple two-dimensional Fourier transform energy data of the range gate along the Doppler dimension.

Alternatively, the processing module 1002 is specially configured to acquire the multiple two-dimensional Fourier transform energy data of the range gate along the Doppler dimension from the two-dimensional Fourier data plane; and perform a statistic on the multiple two-dimensional Fourier transform energy data by using a histogram, and determine the noise floor level estimation value according to a statistical result of the histogram.

Alternatively, the processing module 1002 is specially configured to divide the multiple preset intervals according to a data range corresponding to the multiple two-dimensional Fourier transform energy data, wherein the multiple preset intervals are arranged in an increasing or decreasing order according to a data range corresponding to each preset interval, divide the multiple two-dimensional Fourier transform energy data into the multiple preset intervals to obtain the number of two-dimensional Fourier transform energy data in each preset interval, determine an interval in which the number of two-dimensional Fourier transform energy data is the largest or an interval in which a median of the multiple two-dimensional Fourier transform energy data is located, as a target preset interval, and determine a noise floor level estimation value in the target preset interval.

Alternatively, the apparatus further includes an outputting module 1003, which is configured to output noise floor level estimation values of all range gates in the two-dimensional Fourier data plane.

The apparatus for determining the noise floor level estimation value provided by the embodiment of the present disclosure may perform the technical solution of the method for determining the noise floor level estimation value in any of the above embodiments, and its implementation principle and beneficial effects are similar to those of the method for determining the noise floor level estimation valued value, which may refer to the implementation principle and beneficial effects of the method for determining the noise floor level estimation valued value, and will not be repeated here.

FIG. 11 is a schematic diagram of a structure of a target detection apparatus 110 based on a noise floor level estimation value provided by an embodiment of the present disclosure. For example, as shown in FIG. 11, the target detection apparatus 110 based on the noise floor level estimation value may include: a searching module 101 and a determination module 1102.

The searching module 101 is configured to acquire a noise floor level estimation value of each range gate in a two-dimensional Fourier data plane corresponding to a LFMCW.

The determination module 1102 is configured to, for each range gate, determine two-dimensional Fourier transform energy data larger than the noise floor level estimation value as two-dimensional Fourier transform energy data corresponding to a target.

The determination module 1102 is configured to determine a detection result of the target according to the two-dimensional Fourier transform energy data corresponding to the target.

Alternatively, the determination module 1102 is specially configured to determine a range gate corresponding to the two-dimensional Fourier transform energy data corresponding to the target as a range of the target, and determine the Doppler gate corresponding to the two-dimensional Fourier transform energy data corresponding to the target as a speed of the target.

Alternatively, the determination module 1102 is specially configured to calculate a difference value between each two-dimensional Fourier transform energy data and the noise floor level estimation value, and determine two-dimensional Fourier transform energy data corresponding to a difference value larger than a preset threshold value as the two-dimensional Fourier transform energy data corresponding to the target.

Alternatively, the apparatus further includes an outputting module 1103, configured to output detection results of all targets in the two-dimensional Fourier data plane.

The target detection apparatus based on the noise floor level estimation provided by the embodiment of the present disclosure may perform the technical solution of the target detection method based on the noise floor level estimation in any of the above embodiments, and its implementation principle and beneficial effects are similar to those of the target detection method based on the noise floor level estimation, which may refer to the implementation principle and the beneficial effects of the target detection method based on the noise floor level estimation, and will not be repeated here.

FIG. 12 is a schematic diagram of a structure of an electronic device provided by an embodiment of the present disclosure. As shown in FIG. 12, the electronic device 1200 may include at least one processor 1201 and a memory 1202.

The memory 1202 is configured to store a program. Specifically, the program may include program codes, which include computer operation instructions.

The memory 1202 may include a high-speed RAM memory, and may also include a non-volatile memory such as at least one disk memory.

The processor 1201 is configured to execute computer-executable instructions stored in the memory 1202 to implement the methods described in the aforementioned method embodiments. Herein, the processor 1201 may be a Central Processing Unit (CPU for short), an Application Specific Integrated Circuit (ASIC for short), or one or more integrated circuits configured to implement embodiments of the present disclosure. Specifically, when implementing the methods described in the aforementioned method embodiments, the electronic device may be, for example, an electronic device having a processing function such as a terminal or a server.

Alternatively, the electronic device 1200 may further include a communication interface 1203. For a specific implementation, if the communication interface 1203, the memory 1202, and the processor 1201 are implemented independently, the communication interface 1203, memory 1202 and processor 1201 may be connected to each other through a bus and implement communication with each other. The bus may be an Industry Standard Architecture (ISA for short) bus, a Peripheral Component (PCI for short) bus, or an Extended Industry Standard Architecture (EISA for short) bus. The bus may be classified into an address bus, a data bus, a control bus, etc., however which does not mean that there is only one bus or one type of buses.

Alternatively, for a specific implementation, if the communication interface 1203, the memory 1202, and the processor 1201 are integrated on one chip, the communication interface 1203, the memory 1202, and the processor 1201 may implement communication through an internal interface.

An embodiment of the present disclosure also provides a computer-readable storage medium, which may include various media capable of storing program codes, such as a U disk, a mobile hard disk, a Read-Only Memory (ROM), a Random Access Memory (RAM), a magnetic disk or an optical disk, etc. In particular, the computer-readable storage medium stores program instructions, which are used for the methods in the above embodiments.

An embodiment of the present disclosure also provides a program product including execution instructions, which are stored in a readable storage medium. At least one processor of the electronic device may read the execution instructions from the readable storage medium, and execute the execution instructions to enable the electronic device to implement the methods provided by the above various embodiments.

Finally, it should be noted that the above embodiments are only used to illustrate the technical solutions of the present disclosure, but not to limit them. Although the present disclosure has been described in detail with reference to the aforementioned embodiments, it should be understood by those of ordinary skills in the art that they may still modify the technical solutions described in the aforementioned embodiments, or may equivalently replace some or all of the technical features thereof, and these modifications or replacements do not make the essence of the corresponding technical solutions depart from a scope of the technical solutions of the embodiments of the present disclosure.

## Claims

1. A method for determining a noise floor level estimation value, comprising:
acquiring a two-dimensional Fourier data plane corresponding to a Linear Frequency Modulation Continuous Wave (LFMCW), wherein the two-dimensional Fourier data plane comprises a range dimension and a Doppler dimension, and the range dimension comprises a plurality of range gates; and
for a range gate, determining a noise floor level estimation value according to a plurality of two-dimensional Fourier transform energy data of the range gate along the Doppler dimension.

2. The method according to claim 1, wherein the determining the noise floor level estimation value according to the plurality of two-dimensional Fourier transform energy data of the range gate along the Doppler dimension comprises:
acquiring the plurality of two-dimensional Fourier transform energy data of the range gate along the Doppler dimension from the two-dimensional Fourier data plane; and
performing a statistic on the plurality of two-dimensional Fourier transform energy data by using a histogram, and determining the noise floor level estimation value according to a statistical result of the histogram.

3. The method according to claim 1, wherein the determining the noise floor level estimation value according to the plurality of two-dimensional Fourier transform energy data of the range gate along the Doppler dimension comprises:
dividing a plurality of preset intervals according to a data range corresponding to the plurality of two-dimensional Fourier transform energy data, wherein the plurality of preset intervals are arranged in an increasing or decreasing order according to a data range corresponding to each preset interval;
dividing the plurality of two-dimensional Fourier transform energy data into the plurality of preset intervals to obtain a number of two-dimensional Fourier transform energy data in each preset interval;
determining an interval in which a number of two-dimensional Fourier transform energy data is the largest or an interval in which a median of the plurality of two-dimensional Fourier transform energy data is located, as a target preset interval; and
determining the noise floor level estimation value in the target preset interval.

4. The method according to claim 3, wherein the plurality of preset intervals are non-uniformly distributed.

5. The method according to claim 3, wherein the determining the noise floor level estimation value in the target preset interval comprises any one of the following:
taking any two-dimensional Fourier transform energy data in the target preset interval as the noise floor level estimation value;
taking an average value of all two-dimensional Fourier transform energy data in the target preset interval as the noise floor level estimation value; and
taking a median of all two-dimensional Fourier transform energy data in the target preset interval as the noise floor level estimation value.

6. The method according to claim 1, wherein the method further comprises:
outputting noise floor level estimation values of all range gates in the two-dimensional Fourier data plane.

7. A target detection method based on a noise floor level estimation value, comprising:
acquiring a noise floor level estimation value of each range gate in a two-dimensional Fourier data plane corresponding to a Linear Frequency Modulation Continuous Wave (LFMCW);
for a range gate, determining two-dimensional Fourier transform energy data larger than the noise floor level estimation value as two-dimensional Fourier transform energy data corresponding to a target; and
determining a detection result of the target according to the two-dimensional Fourier transform energy data corresponding to the target.

8. The target detection method according to claim 7, wherein the determining the detection result of the target according to the two-dimensional Fourier transform energy data corresponding to the target comprises:
determining a range gate corresponding to the two-dimensional Fourier transform energy data corresponding to the target as a range of the target, and determining a Doppler gate corresponding to the two-dimensional Fourier transform energy data corresponding to the target as a speed of the target.

9. The target detection method according to claim 7, wherein the determining the two-dimensional Fourier transform energy data larger than the noise floor level estimation value as the two-dimensional Fourier transform energy data corresponding to the target comprises:
calculating a difference value between each two-dimensional Fourier transform energy data and the noise floor level estimation value; and
determining two-dimensional Fourier transform energy data corresponding to a difference value larger than a preset threshold value as the two-dimensional Fourier transform energy data corresponding to the target.

10. The target detection method according to any one of claims 7 to 9, wherein the method further comprises:
outputting detection results of all targets in the two-dimensional Fourier data plane.

11. An apparatus for determining a noise floor level estimation value, comprising:
an acquisition module, configured to acquire a two-dimensional Fourier data plane corresponding to a Linear Frequency Modulation Continuous Wave (LFMCW), wherein the two-dimensional Fourier data plane comprises a range dimension and a Doppler dimension, and the range dimension comprises a plurality of range gates; and
a processing module, configured to, for a range gate, determine a noise floor level estimate value according to a plurality of two-dimensional Fourier transform energy data of the range gate along the Doppler dimension.

12. A target detection apparatus based on a noise floor level estimation value, comprising:
a searching module, configured to acquire a noise floor level estimation value of each range gate in a two-dimensional Fourier data plane corresponding to a Linear Frequency Modulation Continuous Wave (LFMCW);
a determination module, configured to, for each range gate, determine two-dimensional Fourier transform energy data larger than the noise floor level estimation value as two-dimensional Fourier transform energy data corresponding to a target;
wherein the determination module is configured to determine a detection result of the target according to the two-dimensional Fourier transform energy data corresponding to the target.

13. An electronic device, comprising: a processor, and a memory communicatively connected to the processor;
wherein the memory stores computer-executable instructions; and
the processor executes the computer-executable instructions stored in the memory to implement the method of any one of claims 1 to 10.

14. A computer-readable storage medium having computer-executable instructions stored thereon, wherein when the computer-executable instructions are executed by a processor, the method of any one of claims 1 to 10 is implemented.

15. A computer program product comprising a computer program, wherein when the computer program is executed by a processor, the method of any of claims 1 to 10 is implemented.
